# EUROPEAN PATENT SPECIFICATION

(11) **EP 2 632 778 B1**
(45) Date of publication and mention of the grant of the patent: **15.05.2019**
(21) Application number: 11781764.3
(22) Date of filing: 20.10.2011
(51) Int. Cl.: B60S 1/40

(54) **WIPER BLADE FOR A WIPER DEVICE FOR THE CLEANING OF VEHICLE WINDOWS AND WIPER DEVICE**
WISCHBLATT FÜR EINE WISCHERVORRICHTUNG ZUR REINIGUNG VON FAHRZEUGFENSTERN UND WISCHERVORRICHTUNG
BALAI D'ESSUIE-GLACE POUR UN DISPOSITIF D'ESSUIE-GLACE POUR NETTOYER LES VITRES D'UN VÉHICULE ET DISPOSITIF D'ESSUIE-GLACE

(30) Priority: 29.10.2010 DE 102010049740
(43) Date of publication of application: 04.09.2013
(73) Proprietor: Valeo Wischersysteme GmbH, 74321 Bietigheim-Bissingen (DE)
(72) Inventor: BUSS, Michael, 75428 Illingen (DE)
(74) Representative: Callu-Danseux, Violaine
(86) International application number: PCT/EP2011/068308
(87) International publication number: WO 2012/055746

(56) References cited:
- EP-A1- 1 484 224
- EP-A1- 2 080 680
- EP-A1- 2 228 271
- WO-A1-02/40328
- US-A1- 2006 059 647

## Description

The invention relates to a wiper blade for a wiper device for the cleaning of vehicle windows according to the introductory clause of Claim 1. The invention further relates to a wiper device.

A wiper blade according to the introductory clause of Claim 1 is known from document US 2006 059 647 A1, while a wiper blade with a similar configuration is known from document DE 102 12 441 A1 of the applicant. In this last document, lugs are integrally formed on a wiper arm which is constructed as a stamped/bent part from sheet metal, said lugs extending in the longitudinal direction of the wiper arm. The lugs of the wiper arm engage, on mounting of the wiper blade, into recesses arranged on the wiper blade adapter, wherein the axial position of the wiper blade on introduction of the wiper blade into the wiper arm is determined by the size of the recesses, against which the lugs abut axially on inserting. For the redetachable connecting of the wiper blade to the wiper arm, the wiper arm adapter has in addition manually operable detent hooks or detent means, made from plastic, which project into corresponding mounts of the wiper arm and engage therewith. It is essential here that the movement sequence on connecting of the wiper blade with the wiper arm is characterized by a partially oblique movement direction of the wiper blade in relation to the longitudinal axis of the wiper blade for inserting the lugs into the mounts of the wiper arm.

Proceeding from the presented prior art, the invention is based on the problem of further developing a wiper device for the cleaning of vehicle windows according to the introductory clause of Claim 1 such that a simplified handling is made possible, i.e. a releasing and mounting of the wiper blade on the wiper arm which is able to be ascertained intuitively for an operator. This problem is solved in a wiper device for the cleaning of vehicle windows by the features of Claim 1. The invention is based here on the idea of making possible the connection between the wiper blade and the wiper arm in the form of a bayonet closure by vertical introduction of connecting lugs into slots of the wiper blade adapter, which is subsequently engaged with the wiper arm via a linear movement. Therefore two movements of the wiper blade, arranged perpendicularly with respect to each other, to the wiper arm are necessary, which can be ascertained or respectively recognized particularly easily by an operator.

Advantageous further developments of the wiper device for the cleaning of vehicle windows according to the invention are indicated in the subclaims.

A particularly simple producibility of the wiper arm is achieved when the wiper arm of the wiper device is constructed as a sheet metal stamped/bent part, and wherein the connecting lugs are integrally formed in one piece on the wiper arm and are bent around.

In a further embodiment of the invention, provision is made that the wiper blade adapter has connections for the feeding of a washing fluid into the wiper blade body. Here, through the type of fastening according to the invention, it is particularly advantageous that an only relatively small axial displacement path of the wiper arm to the wiper arm adapter is necessary, so that the hose length, which is necessary owing to the movement of the wiper blade on its fastening or releasing from the wiper arm, can be minimized. Thereby, a particularly high degree of reliability of a supply of the wiper blade with the washing fluid is achieved.

Further advantages, features and details of the invention will be apparent from the following description of preferred example embodiments and with the aid of the drawings, showing in:
- Fig. 1: a perspective view onto a wiper blade mounted on a wiper arm,
- Fig. 2 to 5: the mounting of a wiper blade on a wiper arm during various phases, respectively in perspective view,
- Fig. 6: a perspective view of a wiper arm in the fastening region for the wiper blade,
- Fig. 7: an adapter element on the wiper arm side, in perspective view,
- Fig. 8: the wiper blade, mounted on a wiper arm, with wiper blade adapter in perspective view and

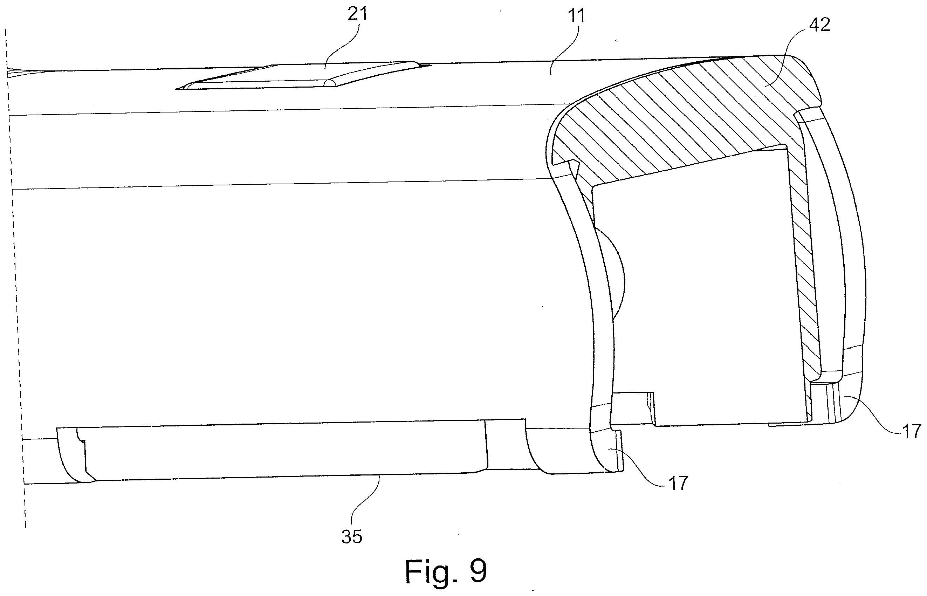

- Fig. 9: a section in the direction of the plane IX-IX of Figure 8.

Identical components or respectively components with the same function are provided with the same reference numbers in the figures.

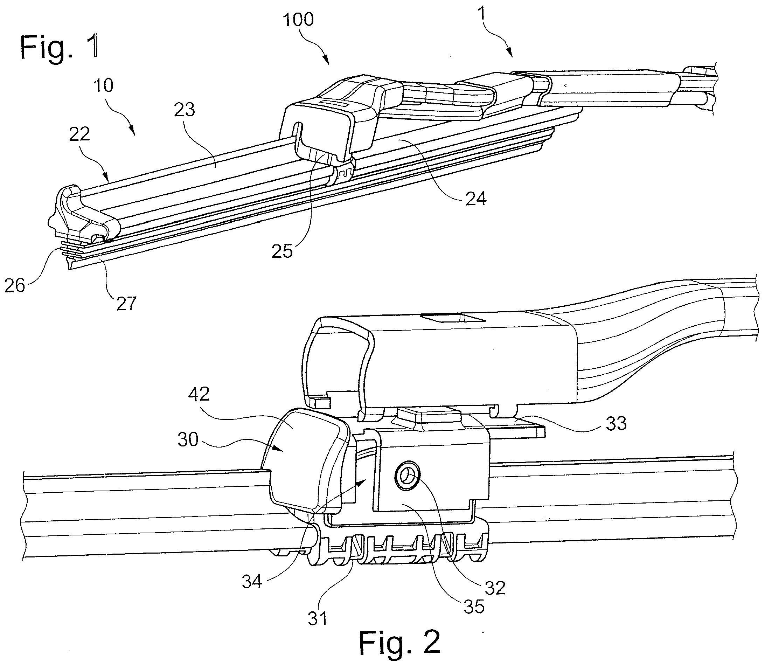

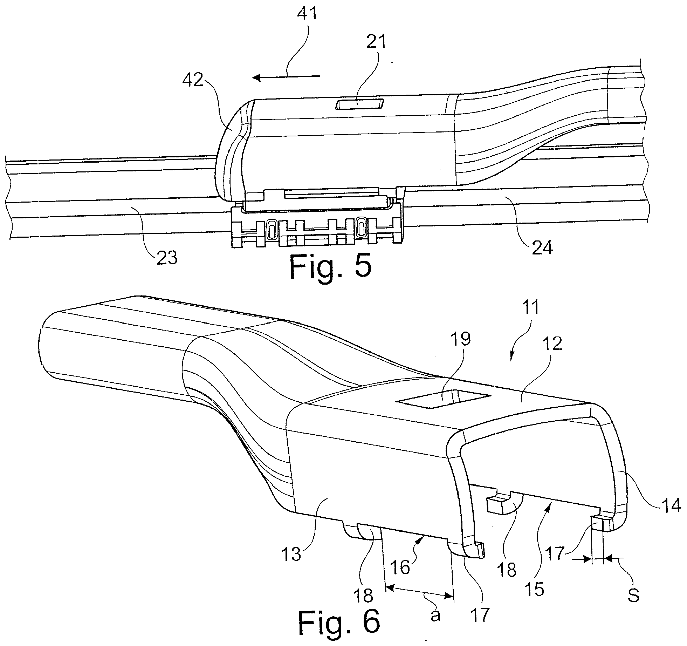

The wiper device 100 illustrated in the figures for the cleaning of vehicle windows, in particular of windscreens of motor vehicles, consists of a wiper arm 1, constructed as a sheet metal stamped/bent part, and of a wiper blade 10 fastened exchangeably on the wiper arm 1. The wiper arm 1, connected with a wiper drive which is not shown, has a U-shaped cross-section on the side facing the wiper blade 10, as can be best seen with the aid of Fig. 2 and 6. The wiper arm 1, constructed as a stamped/bent part, has a rectangular base section 12 here in the connecting region 11 with the wiper blade 10, from which side sections 13, 14 project which are bent substantially at right-angles in the direction of the wiper blade 10. In the illustrated example embodiment respectively two connecting lugs 17, 18 are integrally formed in one piece on the lower boundary edges 15, 16 of the side sections 13, 14, facing away from the base section 12. Whereas the one connecting lugs 17 are aligned with the end or respectively the front face of the wiper arm 1, the other connecting lugs 18 are arranged in longitudinal direction of the wiper arm 1 spaced apart from the connecting lugs 17. The connecting lugs 17, 18 are bent around inwards at right-angles facing each other and in the example embodiment have a rectangular cross-section.

In the base section 12 of the wiper arm 1 a rectangular cut-out is constructed in the form of an aperture 19. The aperture 19 cooperates with a detent button 21, which is a component of the wiper blade 10.

The wiper blade 10 has a wiper blade body 22 running in the longitudinal axis of the wiper blade, which has two wiper blade sections 23, 24. The two wiper blade sections 23, 24, which are constructed having equal length in the example embodiment, are connected with each other inter alia via a wiper blade adapter 25. In corresponding mounts or respectively longitudinal grooves of the wiper blade sections 23, 24, a wiper rubber 26 is held, running over the entire length of the wiper blade 10, with its side which faces the vehicle window forming a wiper lip 27.

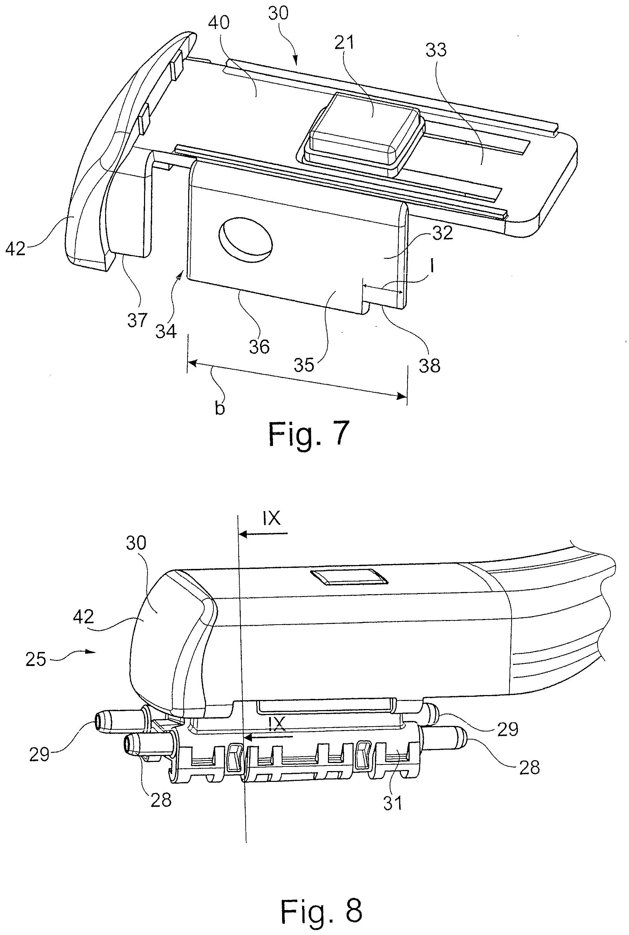

As can be seen in particular with the aid of Fig. 8, the wiper blade adapter 25 has respectively two connecting nozzles 28, 29 associated with the spray ducts constructed in the wiper blade sections 23, 24, which hydraulically connect the spray ducts of the wiper blade sections 23, 24 with the wiper blade adapter 25. Spray openings, which serve for the supplying of a washing fluid onto the vehicle window, which can likewise not be seen in the figures because they are already known from the prior art, branch off from the spray ducts in the wiper blade sections 23, 24. The wiper blade adapter 25 or respectively the connecting nozzles 28, 29 are connected via a supply line for the washing fluid which is guided in the wiper arm 1 on the vehicle side.

The wiper blade adapter 25 consists substantially of two parts which are arranged pivotably with respect to each other. The first part is designated here as adapter element 30 on the wiper arm side, whereas the other part is designated as adapter element 31 on the wiper blade side. The adapter element 31 on the wiper blade side also carries the connecting nozzles 28, 29. The two adapter elements 30, 31 are arranged so as to be movable with respect to each other in a rotation axis 20.

The connection of the adapter element 25 with the wiper arm 1 takes place via the adapter element 30 on the wiper arm side, which cooperates with the wiper arm 1 in a form-fitting and force-fitting manner. For this, the wiper blade adapter 25, consisting of plastic, or respectively the adapter element 30 on the wiper arm side, has an elastic section 33, which can be seen in Fig. 7, at the free end of which the detent button 21 is arranged. In the position of the wiper blade 10 connected with the wiper arm 1, the detent button 21 engages into the aperture 19 on the wiper arm 1 in a form-fitting manner and positions the wiper arm 10 in the wiper blade longitudinal direction to the wiper arm 1.

The adapter element 30 on the wiper arm side, having substantially a U-shaped cross-section, has two longitudinal slots 34, acting as first mounts, associated with the one connecting lugs 17 (instead of longitudinal slots 34, corresponding grooves could also be provided). The longitudinal slots 34 are constructed on the side walls 35 of the adapter element 30 on the wiper arm side, wherein the width b of the side walls 35, running in wiper blade longitudinal direction, between the longitudinal slots 34 and a rear, in particular perpendicularly arranged, boundary 32 of the side wall 35 acting as second mount for the connecting lugs 18, corresponds to the distance a (Fig. 6) of the connecting lugs 17, 18 to each other. At the lower boundary edges 36 of the side walls 35, notches 37, 38 are constructed, which cooperate with the connecting lugs 17, 18. The length 1 of the notches 37, 38 preferably corresponds here to at least the width s of the connecting lugs 17, 18.

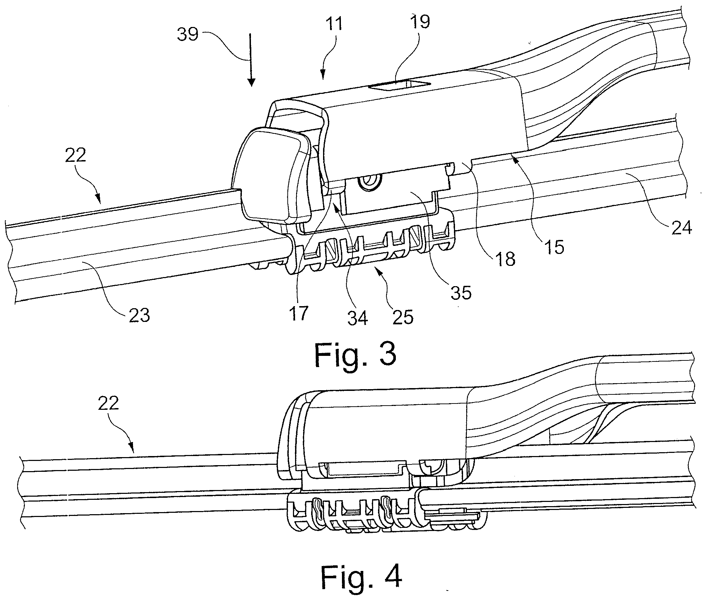

The mounting of a wiper blade 10 on the wiper arm 1 is now explained in further detail with the aid of Fig. 2 to 5: Firstly, the connecting takes place of connecting hoses for the washing fluid on the vehicle side with the wiper blade adapter 25 (not illustrated). In accordance with Fig. 2, in a next step the wiper blade 10 is positioned to the wiper arm 1 such that the connecting lugs 17 are aligned with the longitudinal slots 34 and with the boundaries 32 in a plane perpendicularly to the wiper blade longitudinal axis. Subsequently, the wiper arm 1 and the wiper blade 10 are moved towards each other in accordance with Fig. 3 in the direction of the arrow 39, so that the connecting lugs 17 engage into the longitudinal slots 34, whereas the other connecting lugs 18 slide along the boundaries 32 of the side walls 35. In Fig. 4 the status is illustrated in which the wiper blade 10 is held in the connecting region 11 of the wiper arm 1. Here, the connecting lugs 17, 18 are arranged at the height of the notches 37, 38, and the base section 12 of the connecting region 11 lies on the upper side 40 (Fig. 7) of the adapter element 30 on the wiper arm side. As the side sections 13, 14 of the connecting region 11 continue to lie against the wide walls 35 of the adapter element 30 on the wiper arm side, a tilting of the wiper blade 10 to the wiper arm 1 is not possible. Now, in accordance with Fig. 5, the wiper blade 10 is moved in the wiper blade longitudinal direction on the wiper arm 1 in the direction of the arrow 41, i.e. perpendicularly to the movement on introduction of the connecting lugs 17, 18 in the direction of the arrow 39, so that the connecting lugs 17, 18 arrive into the region of the notches 38, 39 and cooperate therewith, wherein the notches 37, 38 act as axial stops for the connecting lugs 17, 18. As the movement path of the wiper blade 10 to the wiper arm 1 in the wiper blade longitudinal direction corresponds here only to the length 1 of the notches 38, 39, the additional length of the supply hose on the vehicle side, which is necessary owing to mounting, is relatively short. In the end position of the wiper blade 10 on the wiper arm 1, the detent button 21 engages into the aperture 19 of the wiper arm and positions the wiper blade 10. In addition, the base section 12 and the side sections 13, 14 are arranged on the one front face of the wiper arm 1 in abutting contact with a front cover 42 of the adapter element 31 on the wiper blade side. To release the wiper blade 10 from the wiper arm 1, the described mounting steps take place in reverse order. Through the configuration of the connecting lugs 17, 18 according to the invention, furthermore the particular advantage is achieved that even in the case of a failure of the connection on the detent button 21, the wiper blade 10 remains on the wiper arm 1 in a form-fitting manner.

The wiper device 100 so far described can be altered or respectively modified in a variety of ways, without departing from the invention as defined in the appended claims. Thus, for example, it is conceivable that the wiper blade 10 does not have any integrated lines for the washing fluid, or else is additionally constructed for example as a heatable wiper blade 10. Furthermore, instead of a detent button 21, which cooperates with an aperture 19 constructed on the base section 12, there can also be differently constructed or respectively arranged detent elements.

### List of reference numbers

- 1: wiper arm
- 10: wiper blade
- 11: connecting region
- 12: base section
- 13: side section
- 14: side section
- 15: boundary edge
- 16: boundary edge
- 17: connecting lug
- 18: connecting lug
- 19: aperture
- 20: rotation axis
- 21: detent button
- 22: wiper blade body
- 23: wiper blade section
- 24: wiper blade section
- 25: wiper blade adapter
- 26: wiper rubber
- 27: wiper lip
- 28: connecting nozzle
- 29: connecting nozzle
- 30: adapter element on the wiper arm side
- 31: adapter element on the wiper blade side
- 32: boundary
- 33: elastic section
- 34: longitudinal slot
- 35: side wall
- 36: boundary edge
- 37: notch
- 38: notch
- 39: arrow
- 40: upper side
- 41: arrow
- 42: cover
- 100: wiper device

- a: distance
- b: width
- 1: length
- s: width

## Claims

1. Wiper blade (10) for a wiper device (100) for the cleaning of vehicle windows, wherein the wiper blade (10) has a wiper blade body (22) extending in the wiper blade longitudinal direction, with at least one wiper rubber (26), forming a wiper lip (27), on the wiper blade body (22), with at least one wiper blade adapter (25) for an at least mechanical connection of the wiper blade (10) with a wiper arm (1) of the wiper device (100), wherein the wiper blade adapter (25) consists of an adapter element (30) on the wiper arm side and an adapter element (31) on the wiper blade side, which are arranged pivotably with respect to each other in a rotation axis (20), wherein connecting lugs (17, 18), spaced apart from each other in longitudinal direction, are arranged on the wiper arm (1), which are able to cooperate in a mounting position with mounts (32, 34) of the wiper blade adapter (25), and in an operating position are connectable via a form fit with the wiper blade (10), and with a detent element (21), arranged on the wiper blade adapter (25), which is able to cooperate in the operating position with a cut-out (19) on the wiper arm (1) and to engage the wiper blade (10) to the wiper arm (1), wherein the mounts are constructed as slots (34) or respectively boundaries (32) constructed perpendicularly to the wiper blade longitudinal direction, and that the connecting lugs (17, 18) are arranged on side walls (13, 14) of the wiper arm (1) having a U-shaped cross-section in a connecting region (11), wherein respectively two connecting lugs (17, 18) are integrally formed in one piece on lower boundary edges (15,16) of the side walls (13, 14) of the wiper arm (1), wherein the first connecting lugs (17) are aligned with the end or respectively front face of the wiper arm (1) and the second connecting lugs (18) are arranged in longitudinal direction of the wiper arm (1) spaced apart from the first connecting lugs (17), wherein the connecting lugs (17, 18) are able to be aligned towards the wiper blade adapter (25) and to cooperate in the operating position with notches (37, 38) constructed on the wiper blade adapter (25), which hold the wiper blade (10) perpendicularly to the mounting direction on introduction of the wiper blade (10) into the slots (34) or respectively boundaries (32), wherein a cover (42) of the wiper blade adapter (25) in the operating position of the wiper device (100) covers a front face of the wiper arm (1) facing thereto, **characterized in that** the adapter element (30) on the wiper arm side, having substantially a U-shaped cross-section, has two longitudinal slots (34) acting as first mounts, associated with the first connecting lugs (17).

2. Wiper blade according to Claim 1,
**characterized in that**
the wiper blade adapter (25) has connections for the supplying of a washing fluid into the wiper blade body (22) .

3. Wiper blade according to Claim 1 or 2,
**characterized in that**
the notches (37, 38) act as axial stops for the connecting lugs (17, 18).

4. Wiper blade according to one of Claims 1 to 3, **characterized in that**
the wiper blade adapter (25) consists of plastic and is constructed as an injection moulded part.

5. Wiper device (100) for the cleaning of vehicle windows, consisting of a wiper blade (10) according to one of Claims 1 to 4 and of a wiper arm (1) on which the wiper blade (10) is exchangeably fastened.

6. Wiper device according to Claim 5, **characterized in that**
the wiper arm (1) of the wiper device (100) is constructed as a sheet metal stamped/bent part, and wherein the connecting lugs (17, 18) are integrally formed in one piece on the wiper arm (1) and bent around.

7. Wiper device according to Claim 5 or 6,
**characterized in that**
the connecting lugs (17, 18) are arranged on lower boundary edges (16) of the side walls (13, 14) of the wiper arm (1) and that the distance (a) of two connecting lugs (17, 18) spaced apart from each other on a side wall (13, 14) corresponds to the distance (b) between a slot (34) and a boundary (32) on the wiper blade adapter (25).

## Patentansprüche

1. Wischerblatt (10) für eine Wischervorrichtung (100) zur Reinigung von Fahrzeugfenstern, wobei das Wischerblatt (10) einen Wischerblattkörper (22) aufweist, der sich in der Längsrichtung des Wischerblatts erstreckt, mit wenigstens einem eine Wischerlippe (27) bildenden Wischergummi (26) auf dem Wischerblattkörper (22), mit wenigstens einem Wischerblattadapter (25) für eine wenigstens mechanische Verbindung des Wischerblatts (10) mit einem Wischerarm (1) der Wischervorrichtung (100), wobei der Wischerblattadapter (25) aus einem Adapterelement (30) auf der Wischerarmseite und einem Adapterelement (31) auf der Wischerblattseite besteht, die drehbar in Bezug zueinander in einer Drehachse (20) angeordnet sind, wobei in Längsrichtung voneinander beabstandete Verbindungslaschen (17, 18) an dem Wischerarm (1) angeordnet sind, die in der Lage sind, in einer Befestigungsstellung mit Befestigungen (32, 34) des Wischerblattadapters (25) zusammenzuwirken, und in einer Betriebsstellung über einen Formschluss mit dem Wischerblatt (10) verbindbar sind, und mit einem an dem Wischerblattadapter (25) angeordneten Rastelement (21), das in der Lage ist, in der Betriebsstellung mit einer Aussparung (19) an dem Wischerarm (1) zusammenzuwirken und das Wischerblatt (10) mit dem Wischerarm (1) in Eingriff zu bringen, wobei die Befestigungen als Schlitze (34) beziehungsweise Begrenzungen (32) ausgeführt sind, die senkrecht zu der Längsrichtung des Wischerblatts ausgeführt sind, und dass die Verbindungslaschen (17, 18) auf Seitenwänden (13, 14) des Wischerarms (1) angeordnet sind, die einen U-förmigen Querschnitt in einem Verbindungsbereich (11) aufweisen, wobei jeweils zwei Verbindungslaschen (17, 18) ganzheitlich in einem Stück an unteren Abgrenzungsrändern (15, 16) der Seitenwände (13, 14) des Wischerarms (1) ausgebildet sind, wobei die ersten Verbindungslaschen (17) in einer Linie mit dem Ende beziehungsweise der Stirnseite des Wischerarms (1) ausgerichtet sind und die zweiten Verbindungslaschen (18) in Längsrichtung des Wischerarms (1) beabstandet von den ersten Verbindungslaschen (17) angeordnet sind, wobei die Verbindungslaschen (17, 18) in der Lage sind, in Richtung zu dem Wischerblattadapter (25) ausgerichtet zu sein und in der Betriebsstellung mit an dem Wischerblattadapter (25) ausgeführten Nuten (37, 38) zusammenzuwirken, die das Wischerblatt (10) beim Einführen des Wischerblatts (10) in die Schlitze (34) beziehungsweise Abgrenzungen (32) senkrecht zu der Befestigungsrichtung halten, wobei eine Abdeckung (42) des Wischerblattadapters (25) in der Betriebsstellung der Wischervorrichtung (100) eine derselben zugewandte Stirnseite des Wischerarms (1) abdeckt, **dadurch gekennzeichnet, dass** das im Wesentlichen einen U-förmigen Querschnitt aufweisende Adapterelement (30) auf der Wischerarmseite zwei Längsschlitze (34) aufweist, die als mit den ersten Verbindungslaschen (17) zusammenwirkende erste Befestigungen wirken.

2. Wischerblatt nach Anspruch 1,
**dadurch gekennzeichnet, dass**
der Wischerblattadapter (25) Anschlüsse aufweist, um eine Waschflüssigkeit in den Wischerblattkörper (22) zuzuführen.

3. Wischerblatt nach Anspruch 1 oder 2,
**dadurch gekennzeichnet, dass**
die Nuten (37, 38) als axiale Anschläge für die Verbindungslaschen (17, 18) wirken.

4. Wischerblatt nach einem der Ansprüche 1 bis 3,
**dadurch gekennzeichnet, dass**
der Wischerblattadapter (25) aus Kunststoff besteht und als Spritzgussteil ausgeführt ist.

5. Wischervorrichtung (100) für die Reinigung von Fahrzeugfenstern, die aus einem Wischerblatt (10) nach einem der Ansprüche 1 bis 4 und aus einem Wischerarm (1) besteht, an dem das Wischerblatt (10) austauschbar befestigt ist.

6. Wischervorrichtung nach Anspruch 5,
**dadurch gekennzeichnet, dass**
der Wischerarm (1) der Wischervorrichtung (100) als Blechstanz-/-biegeteil ausgeführt ist und wobei die Verbindungslaschen (17, 18) ganzheitlich in einem Stück an dem Wischerarm (1) ausgebildet und umgebogen sind.

7. Wischervorrichtung nach Anspruch 5 oder 6,
**dadurch gekennzeichnet, dass**
die Verbindungslaschen (17, 18) an unteren Abgrenzungsrändern (16) der Seitenwände (13, 14) des Wischerarms (1) angeordnet sind und dass der Abstand (a) von zwei auf einer Seitenwand (13, 14) voneinander beabstandeten Verbindungslaschen (17, 18) dem Abstand (b) zwischen einem Schlitz (34) und einer Abgrenzung (32) an dem Wischerblattadapter (25) entspricht.

## Revendications

1. Balai d'essuie-glace (10) pour un dispositif d'essuie-glace (100) pour le nettoyage de vitres de véhicules, le balai d'essuie-glace (10) comportant un corps (22) de balai d'essuie-glace s'étendant dans la direction longitudinale du balai d'essuie-glace, comprenant au moins un caoutchouc d'essuie-glace (26), formant un bec d'essuie-glace (27), sur le corps (22) de balai d'essuie-glace, comprenant au moins un adaptateur (25) de balai d'essuie-glace pour au moins un raccord mécanique du balai d'essuie-glace (10) avec un bras d'essuie-glace (1) du dispositif d'essuie-glace (100), dans lequel l'adaptateur (25) de balai d'essuie-glace est constitué d'un élément adaptateur (30) sur le côté du bras d'essuie-glace et d'un élément adaptateur (31) sur le côté du balai d'essuie-glace, qui sont disposés de façon pivotante l'un par rapport à l'autre sur un axe de rotation (20), dans lequel des pattes de raccord (17, 18), espacées l'une de l'autre dans la direction longitudinale, sont disposées sur le bras d'essuie-glace (1), pouvant coopérer dans une position de montage avec des montures (32, 34) de l'adaptateur (25) de balai d'essuie-glace, et qui dans une position de fonctionnement peuvent être raccordées par le biais d'un ajustement de la forme au balai d'essuie-glace (10) et à un organe de détente (21), disposé sur l'adaptateur (25) de balai d'essuie-glace, qui peut coopérer dans la position de fonctionnement avec une découpe (19) sur le bras d'essuie-glace (1) et mettre en prise le balai d'essuie-glace (10) et le bras d'essuie-glace (1), dans lequel les montures sont construites sous forme de fentes (34) ou respectivement de pourtours (32) construits perpendiculairement à la direction longitudinale du balai d'essuie-glace, et les pattes de raccord (17, 18) sont disposées sur des parois latérales (13, 14) du bras d'essuie-glace (1) présentant une section transversale en forme de U dans une région de raccord (11), dans lequel deux pattes de raccord (17, 18) sont respectivement intégrées d'une seule pièce sur des bords de pourtour inférieurs (15, 16) des parois latérales (13, 14) du bras d'essuie-glace (1), dans lequel les premières pattes de raccord (17) sont alignées respectivement avec la surface d'extrémité ou avant du bras d'essuie-glace (1) et les secondes pattes de raccord (18) sont disposées dans la direction longitudinale du bras d'essuie-glace (1) espacées des premières pattes de raccord (17), dans lequel les pattes de raccord (17, 18) peuvent être alignées en direction de l'adaptateur (25) de balai d'essuie-glace et coopérer dans la position de fonctionnement avec des encoches (37, 38) construites sur l'adaptateur (25) de balai d'essuie-glace, qui maintiennent le balai d'essuie-glace (10) perpendiculairement à la direction de montage lors de l'introduction du balai d'essuie-glace (10) dans les fentes (34) ou respectivement dans les pourtours (32), dans lequel un couvercle (42) de l'adaptateur (25) de balai d'essuie-glace recouvre dans la position de fonctionnement du dispositif d'essuie-glace une surface avant du bras d'essuie-glace (1) qui lui fait face, **caractérisé en ce que** l'élément adaptateur (30) sur le côté du bras d'essuie-glace présentant sensiblement une section transversale en forme de U, possède deux fentes longitudinales (34) jouant le rôle de premières montures, associées aux premières pattes de raccord (17).

2. Balai d'essuie-glace selon la revendication 1, **caractérisé en ce que**
l'adaptateur (25) de balai d'essuie-glace comprend des raccords pour distribuer un fluide de lavage dans le corps (22) de balai d'essuie-glace.

3. Balai d'essuie-glace selon la revendication 1 ou 2, **caractérisé en ce que**
les encoches (37, 38) jouent le rôle de butées axiales pour les pattes de raccord (17, 18).

4. Balai d'essuie-glace selon l'une quelconque des revendications 1 à 3, **caractérisé en ce que**
l'adaptateur (25) de balai d'essuie-glace est constitué de plastique et est construit sous forme de pièce moulée par injection.

5. Dispositif d'essuie-glace (100) pour le nettoyage de vitres de véhicules, constitué d'un balai d'essuie-glace (10) selon l'une quelconque des revendications 1 à 4 et d'un bras d'essuie-glace (1) sur lequel le balai d'essuie-glace (10) est fixé de façon amovible.

6. Dispositif d'essuie-glace selon la revendication 5, **caractérisé en ce que**
le bras d'essuie-glace (1) du dispositif d'essuie-glace (100) est construit sous forme de pièce de feuille métallique estampée/pliée, et dans lequel les pattes de raccord (17, 18) sont intégrées d'une seule pièce sur le bras d'essuie-glace (1) et pliées autour.

7. Dispositif d'essuie-glace selon la revendication 5 ou 6, **caractérisé en ce que**
les pattes de raccord (17, 18) sont disposées sur des bords de pourtour inférieurs (16) des parois latérales (13, 14) du bras d'essuie-glace (1) et **en ce que** la distance (a) entre deux pattes de raccord (17, 18) espacées l'une de l'autre sur une paroi latérale (13, 14) correspond à la distance (b) entre une fente (34) et un pourtour (32) sur l'adaptateur (25) de balai d'essuie-glace.
